(19) Europäisches Patentamt
European Patent Office
Office européen des brevets

(11) EP 0 715 630 B1

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(21) Anmeldenummer: **94923653.3**

(22) Anmeldetag: **16.08.1994**

(51) Int Cl.[6]: **C07F 7/08**, C07F 7/21, C08G 77/06

(86) Internationale Anmeldenummer:
**PCT/DE94/00934**

(87) Internationale Veröffentlichungsnummer:
**WO 95/06050 (02.03.1995 Gazette 1995/10)**

(54) **VERFAHREN ZUR HERSTELLUNG VON EPOXYSILOXANEN**

METHOD OF PRODUCING EPOXYSILANES

PROCEDE DE PRODUCTION D'EPOXYSILOXANES

(84) Benannte Vertragsstaaten:
**BE CH DE ES LI NL**

(30) Priorität: **24.08.1993 DE 4328465**

(43) Veröffentlichungstag der Anmeldung:
**12.06.1996 Patentblatt 1996/24**

(73) Patentinhaber: **SIEMENS AKTIENGESELLSCHAFT**
**80333 München (DE)**

(72) Erfinder:
- **WIPFELDER, Ernst, Dr.**
  **D-81673 München (DE)**
- **HÖHN, Klaus, Dr.**
  **D-82024 Taufkirchen (DE)**

(56) Entgegenhaltungen:
**EP-A- 0 382 366** **FR-A- 2 072 619**

- **CLARSON, S.J. AND SEMLYEN, J.A. 'SILOXANE POLYMERS' 1993 , PTR PRENTICE HALL , ENGLEWOOD CLIFFS, NEW JERSEY * Kapitel 4, Seiten 193-216, siehe besonders Abschnitt 4.2.2, Seite 198 ***
- **DIE ANGEWANDTE MAKROMOLEKULARE CHEMIE, Bd.218, Mai 1994 Seiten 111 - 126 WIPFELDER, E. ET AL. 'EPOXYSILOXANE RESINS BY THE CONDENSATION OF 3-GLYCIDYLOXYPROPYLTRIMETHOXYSILANE WITH DIPHENYLSILANEDIOL'**
- **SILOXANE POLYMERS, 1993 , PTR Prentice Hall, Englewood Cliffs, N.J., US, Seiten 193-216**
- **DIE ANGEWANDTE MAKROMOLEKULARE CHEMIE, Bd. 218, Mai 1994, Seiten 111-126, WIPFELDER E. et al.**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 715 630 B1

## Beschreibung

Zur Flexibilisierung von Reaktionsharzen können Silikone bzw. Siloxane eingesetzt werden. Um einen chemisch stabilen Formstoff zu erhalten, sind solche Siloxane bevorzugt, die an der Hartungsreaktion des Reaktionsharzes teilnehmen und chemisch in den Formstoff eingebaut werden.

Zur Abmischung mit Epoxidharzen werden daher epoxidgruppenhaltige Siloxane gesucht, die mit der Epoxidgruppe über SiC-Bindungen stabil und hydrolysebestandig in einen Formstoff eingebunden werden können.

Epoxysilane mit über SiC-gebundenen Epoxidgruppen werden durch Hydrosilylierung von Silanwasserstoffen mit ungesättigten Epoxidverbindungen gewonnen. Unter technologisch anspruchsvollen Bedingungen können unter Wasserausschluß in einer absoluten Inertgasatmosphare Umsetzungsprodukte erhalten werden, die in aufwendigen Reinigungsschritten aufgearbeitet und von dem erforderlichen Katalysator der Platinmetallgruppe befreit werden müssen.

Epoxysilane können auch durch Epoxidierung ungesättigter Silanverbindungen zugänglich gemacht werden. Auch dabei handelt es sich um eine aufwendige Synthese, die zu kostenungünstigen Produkten führt.

Aufgabe der vorliegenden Erfindung ist es daher, ein einfaches Verfahren zur Herstellung von Epoxysiloxanen mit über SiC-gebundenen Epoxidgruppen anzugeben, welches zu einem chemisch und thermisch stabilen Produkt mit ausreichendem Epoxidgehalt führt, das mit gangigen Epoxidharzen für Gießharzanwendungen kompatibel ist und sich mit diesen zusammen aushärten läßt.

Diese Aufgabe wird erfindungsgemaß durch ein Verfahren mit den Merkmalen von Anspruch 1 gelöst. Weitere Ausgestaltungen der Erfindung und eine bevorzugte Verwendung für das Verfahrensprodukt sind weiteren Ansprüchen zu entnehmen.

Das erfindungsgemäße Verfahren läßt sich in einer einfachen Eintopfreaktion unter Normalbedingungen bezüglich Atmosphäre und Druck mit minimalem Verfahrensaufwand in kurzer Zeit durchführen. Als Produkt wird ein Gemisch verschiedener Siloxane erhalten, welches überwiegend cyclische tri- und tetramere Kondensationsprodukte aufweist. Bei konstanten Reaktionsbedingungen läßt sich das Verfahren reproduzierbar durchführen. Es können dabei transparente Öle erhalten werden, die mit entsprechenden Harzkomponenten gemischt transparente Formstoffe ergeben. Das Produkt ist mit gängigen Epoxidharzen kompatibel und läßt sich ohne weitere Reinigung oder Aufarbeitung als weitere Harzkomponente mit diesen in jedem Verhältnis mischen. Der durch die Art und das Mengenverhältnis der Ausgangssubstanzen vorgegebene Epoxidwert der erhaltenen Siloxane ergibt ein gut vernetzungsfähiges Produkt. Dieses ist mehrere Monate unter nur geringem Viskositätsanstieg und nur geringer Verminderung des Epoxidwerts lagerfähig. Es zeigt eine hohe thermische und thermisch oxidative Stabilität, die auch in dem Formstoff erhalten bleibt, der nach Härtung eines entsprechenden Gemisches mit gängigen Epoxidharzen erhalten wird.

Bei der Kondensationsreaktion wird aus der Alkoxygruppe des Epoxysilans und der OH-Gruppe des Silanols unter Abspaltung des entsprechenden Alkylalkohols eine Si-O-Si-Bindung geknüpft. Als Nebenreaktion werden verschiedene Homokondensationsprodukte des Silanols beobachtet. Der überwiegende Anteil des als Produkt erhaltenen Siloxangemisches besteht jedoch aus den genannten trimeren und tetrameren epoxidgruppenhaltigen Kondensationsprodukten, bei denen der Anteil von cyclischen zu linearen Produkten abhängig von der Reaktionsführung eingestellt werden kann und zum Beispiel 2 : 1 beträgt. In geringem Maße werden auch Nebenprodukte beobachtet, die durch Reaktion der Epoxidgruppe mit Ausgangs-, Zwischen- oder Endprodukten erhalten werden.

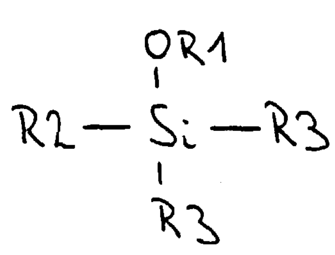

1

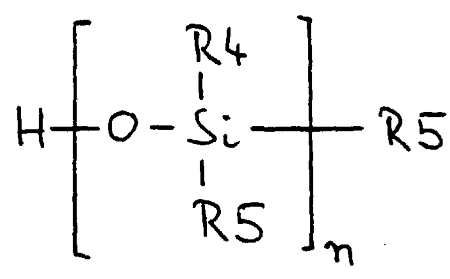

2

Das als Ausgangsverbindung eingesetzte Epoxyalkoxysilan 1 trägt 1 bis 3 kondensationsfahige Alkoxygruppen. Der Rest R1 ist beliebig, ist jedoch vorzugsweise ein Alkylrest mit 1 bis 6 C-Atomen, da die Reaktivität der bei der Kondensation abzuspaltenden Gruppe mit zunehmender Kettenlänge des Alkylrestes abnimmt. Reaktivste Ausgangsverbindungen sind also die Epoxymethoxysilane. Wegen der Unbedenklichkeit des abgespaltenen Ethylalkohols kann als Alkylgruppe auch Ethyl bevorzugt sein.

Aufgrund der einfacheren Verfügbarkeit sind monomere Epoxyalkoxysilane 1 bevorzugt, doch ist die Reaktion prinzipiell auch mit entsprechenden längerkettigen Alkoxysiloxanen möglich.

Einfacher verfügbar und preisgünstiger sind entsprechend längerkettige Silanole 2, die OH-Gruppen in α-Stellung, α-und ω-Stellung oder in der Kette als reaktive Gruppen aufweisen. Die über SiC gebundene weitere organische Gruppe R4 ist bezüglich ihrer Auswahl unkritisch und kann ein beliebiger Alkyl- oder Arylrest sein. Der Index n, der die Anzahl der Siloxaneinheiten bestimmt, kann zwischen 1 und 12 frei gewählt werden. In Abhängigkeit von den übrigen Resten kann sich jedoch mit zunehmender Kettenlänge eine zunehmende Unverträglichkeit der Kondensationsprodukte gegenüber Epoxidharzen ergeben, die deren spätere gewünschte Verwendung als Harzkomponente in Abmischung mit eben diesen Epoxidharzen erschweren oder unmöglich machen kann.

Der epoxidgruppenhaltige Rest R2 der Ausgangsverbindung 1 ist über ein C-Atom an Silizium gebunden und ist ansonsten frei auswählbar. Je nach Verfügbarkeit des entsprechenden Epoxyalkoxysilans kann R2 eine Glycidyloxyalkyl-, eine Epoxyalkyl-, Epoxyaryl- oder eine Epoxycycloalkylgruppe sein. Leicht verfügbar sind die entsprechenden Glycidyloxy verbindungen, die durch Umsetzung entsprechend reaktiver Verbindungen mit Epichlorhydrin erhalten werden.

Je nach Reaktivität der Ausgangsstoffe, welche elektronisch und sterisch gehindert sein können, kann zur Unterstützung der Umsetzung ein Kondensationskatalysator erforderlich sein. Im Hinblick auf die Umsetzung selbst ergeben sich für den Katalysator keine Einschränkungen, so daß ein beliebiger Kondensationskatalysator geeignet ist. Unter Berücksichtigung der bevorzugten bzw. beabsichtigten Verwendung des Produkts als Harzkomponente für Reaktionsharze wird jedoch der Katalysator so ausgewählt, daß die Epoxidgruppe bei der Kondensation möglichst erhalten bleibt. Ein diesbezüglich idealer Katalysator reagiert daher weder ausgesprochen basisch noch ausgesprochen sauer, im Idealfall neutral.

Die Umsetzung der Ausgangsstoffe kann als Lösung in geeigneten Lösungsmitteln erfolgen, beispielsweise in Alkoholen, Ethern oder dergleichen. Möglich ist es auch, die Umsetzung ohne Lösungsmittel als Bulkreaktion durchzuführen. Um ausschließlich klare und transparente Produkte zu erhalten, wird die Umsetzung katalysiert und als Bulkreaktion durchgeführt.

Die Umsetzung kann in einem offenen Reaktionsgefäß erfolgen und wird unter Temperaturerhöhung durchgeführt. Bevorzugte Umsetzungstemperaturen liegen zwischen 80 und 150°C. Vorzugsweise werden dabei flüchtige Reaktionsprodukte ausgetrieben, beispielsweise unter Einblasen eines Inertgases (zum Beispiel Stickstoff) in das Reaktionsgemisch. Dadurch werden Haltbarkeit und Stabilität des Produkts selbst bzw. dessen Abmischung mit Reaktionsharzen erhöht.

Die Zusammensetzung des Produkts ist von den Reaktionsbedingungen abhängig, insbesondere von der Stöchiometrie des Ansatzes, der Reaktionstemperatur und nicht zuletzt der Dauer der Umsetzung, die die Produktzusammensetzung noch wesentlich beeinflussen kann. Ein stöchiometrischer Ansatz der Ausgangsstoffe ist so ausgelegt, daß pro abspaltbarer Alkoxy-Gruppe beim Epoxysilan 1 eine OH-Gruppe beim Silanol 2 zur Verfügung steht. Wegen der im geringen Umfang beobachteten Homokondensation können auch bei stöchiometrischem Ansatz alkoxygruppenhaltige Produkte nachgewiesen werden. Das Silanol 2 dagegen wird vollständig umgesetzt. Das Produkt ist ein zumeist farbloses transparentes Öl, welches mit gängigen Reaktionsharzen in jedem Mischungsverhältnis abgemischt werden kann. Mit aliphatischen und aromatischen Glycidylethern, insbesondere auf der Basis von Bisphenol-A und -F, mit entsprechenden Glycidylestern, aliphatischen und cycloaliphatischen Epoxiden, oder beliebigen anderen, beispielsweise durch Epoxidierung ungesättigter Verbindungen erhaltenen Epoxiden können neue Reaktionsharzmischungen erhalten werden, die mehrere Monate lagerstabil sind. Durch Erhitzen der Reaktionsharzmischungen in einem angelegten Vakuum kann die Lagerstabilitat der Reaktionsharzmischung mit dem neuen Epoxysiloxan weiter gesteigert werden.

Die auch zum Härtungsprozeß des Reaktionsharzes kompatible Epoxysiloxane ergeben in den entsprechenden Reaktionsharzmischungen transparente Formstoffe, deren Glasübergangstemperatur im Vergleich zu anderen siloxanhaltigen Formstoffen ungewöhnlich hoch ist. Oder besser ausgedrückt wird mit der siloxanhaltigen Reaktionsharzmischung eine nur geringfügige Absenkung der Glasübergangstemperatur des Formstoffs gegenüber dem reinen Epoxidharz beobachtet. Außerdem bleiben dessen thermische und thermisch-oxidativen Eigenschaften erhalten.

Im allgemeinen zeigen die erfindungsgemäßen epoxidgruppenhaltigen Siloxankondensate gegenüber den herkömmlich hergestellten Epoxysiloxanen verbesserte Kompatibilität mit den Bestandteilen von Epoxidformuliereungen. Die Chemie (Reaktivität) der Epoxidharzformulierungen wird durch Zumischung der erfindungsgemäßen Epoxysiloxane nicht gestört. Alle Komponenten sind ineinander löslich und ergeben niederviskose Harze für Gießharzanwendungen. Gegenüber Epoxysiloxanen, die durch Hydrosilylierung erhalten werden, ergibt sich der weitere Vorteil einer stark vereinfachten und kostengünstigen Herstellung, und insbesondere der direkten Verwendbarkeit des Produktes ohne vorherige Reinigung als Harzkomponente. Hydro-silylierte Epoxysiloxane sind zudem weder klar, nach transparent oder farbstabil.

Im folgenden wird die Erfindung anhand eines Ausführungsbeispiels näher beschrieben.

Ausführungsbeispiel:

Als Alkoxysilan 1 wird das bereits als Haftvermittler für Epoxidharze bekannte 3-Glycidyloxypropyltrimethoxysilan (GPT) hergenommen, welches bereits in Anteilen von ca. 0,25 Prozent üblichen Epoxidharzen beigemischt wurde. Als Silanol 2 wird Diphenylsilandiol (DPS) ausgewählt.

0,13 mol GPT werden mit jeweils 1 Gewichtsprozent Isopropyltitanat (IPT) bzw. Dibutylzinndilaurat vermischt und bei 120°C (bzw. bei 80°C) innerhalb von 15 Minuten portionsweise mit 0,2 mol DPS versetzt. Unter Methanolentwicklung löst sich DPS auf. Das Reaktionsgemisch wird sechs Stunden unter Rückfluß und anschließend zwei Stunden bei 120°C und 3 Torr erhitzt.

Flüchtige Reaktionsprodukte werden mit einem Stickstoffstrom ausgetrieben.

Es werden transparente Öle erhalten, deren mittlere Molmasse Dampfdruck osmometrisch ermittelt 1550 gr/mol ($CHCl_3$) ergibt.

Bei der lösungsmittelfreien Umsetzung werden im Produkt keine Ausgangsstoffe mehr nachgewiesen. Es enthält geringe Anteile an cyclo-Hexaphenyltrisiloxan und cyclo-Octaphenyltetrasiloxan, die durch Homokondensation von DPS entstehen.

Das mit IPT als Katalysator erhaltene Produkt bleibt beim Lagern bzw. Erwärmen bis 150°C transparent. Der durch Titration ermittelte Epoxidwert zeigt, daß bei der Umsetzung die Epoxidgruppen größtenteils erhalten bleiben. Aus dem $^1$H-NMR-Spektrum, des Produktgemisches zeigt sich, daß ca. eine $SiOCH_3$-Einheit pro eingesetztem GPT im Produkt erhalten bleibt. Das heißt, daß durchschnittlich lediglich zwei der insgesamt drei Methoxyfunktionen von GPT umgesetzt werden.

HPLC-Untersuchungen ergeben vier Signalgruppen, die sich linearen Trimeren, linearen Tetrameren, cyclischen Trimeren und cyclischen Tetrameren zuordnen lassen. Im lösungsmittelfreien Ansatz bei 120°C mit IPT als Katalysator werden diese Komponenten beispielsweise in einer Konzentration von 13 : 20 : 28 : 39 gefunden. Die cyclischen Siloxane bestehen aus 3-Glycidyloxypropylmethoxysilan und Diphenylsilanfragmenten als Kondensationsbausteine, die aus GPT und TPS hervorgehen.

Das thermische Verhalten dieses Produktgemisches wurde in TG/DTA-Experimenten untersucht. Der thermische Abbau erfolgt in zwei exothermen Stufen bei 401°C und 555°C. In der ersten Stufe wird ein Gewichtsverlust bis 500°C von ca. 40 Prozent und bis 750°C von weiteren 15 Prozent beobachtet. Für den hohen Pyrolyserückstand von 45,2 Prozent bei 750°C sind die Siloxanstrukturen sowie die Diphenylsilaneinheiten verantwortlich. Nach Verbrennen des Rußanteils in Luft ergibt sich bei 800°C ein Rückstand von 23,9 Prozent. Stufenweiser Abbau, hoher Pyrolyse- sowie Verbrennungsrückstand weisen auf günstige thermische Eigenschaften des Produkts hin. In der folgenden Tabelle sind einige Eigenschaften des Epoxysilanproduktes zusammengefaßt.

Tabelle

| | |
|---|---|
| Synthese | reproduzierbar |
| Farbe | hellgelb, transparent |
| Brechungsindex $n_D^{20}$ | 1,565 |
| Viskosität in mPas<br>bei 25°C<br>bei 60°C | <br>62.000 bis 66.000<br>1.800 bis 2.000 |
| Epoxidwert (mol/100 g)<br>gefunden<br>berechnet | <br>0,175 bis 0,180<br>0,215 |
| Vertraglichkeit | gut mit organischen Epoxiden |
| Lagerstabilität bei Raumtemperatur | Epoxidwert EEW nimmt in 30 Tagen um 9 Prozent ab |

Auch in Abmischung mit bekannten Epoxidharzformulierungen werden lagerstabile Harze erhalten, die für Gießharzanwendungen in der Elektronik geeignet sind. Damit hergestellte Formstoffe besitzen günstiges thermomechanisches Streßverhalten und lassen transparent darstellen. Die Temperaturabhängigkeit des E-Modul ist gering.

## Patentansprüche

1. Verfahren zur Herstellung von Epoxysiloxanen mit über SiC gebundenen Epoxidgruppen durch Umsetzung eines

Epoxyalkoxysilans der allgemeinen Struktur 1 mit einem Silanol der allgemeinen Struktur 2,

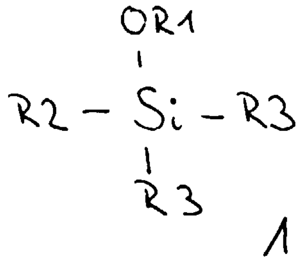

1

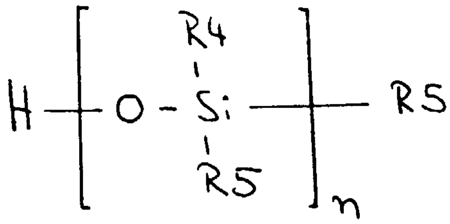

2

wobei

R1 für einen Alkylrest mit 1 bis 6 C-Atomen oder einen Arylrest steht,
R2 ein Glycidyloxyalkyl, Epoxyalkyl oder ein Epoxycycloalkylrest ist, die beiden Reste
R3 unabhängig voneinander für OR1 oder R2 oder einen weiteren Alkyl- bzw. Arylrest stehen,
R4 Alkyl oder Aryl bedeutet, die Reste
R5 unabhängig voneinander für OH oder R4 stehen und
n eine ganze Zahl mit $1 \leq n \leq 12$ ist.

**2.** Verfahren nach Anspruch 1,
bei dem die Umsetzung unter Anwesenheit eines neutralen Kondensationskatalyators vorzugsweise zwischen pH 5 bis 8 durchgeführt wird.

**3.** Verfahren nach Anspruch 1 oder 2,
bei dem die Umsetzung als Bulk-Reaktion durchgeführt wird.

**4.** Verfahren nach einem der Ansprüche 1 bis 3,
bei dem die Umsetzung bei einer Temperatur von 80 bis 150 °C durchgeführt wird.

**5.** Verfahren nach einem der Ansprüche 1 bis 4,
bei dem die Umsetzung des Epoxyalkoxysilans 1 mit dem Silanol 2 annähernd stöchiometrisch durchgeführt wird, so daß bei beiden Reaktionspartnern annähernd dieselbe Zahl kondensationsfahiger Gruppen zur Verfügung steht.

**6.** Verfahren nach einem der Ansprüche 1 bis 5,
bei dem die flüchtigen Anteile während der Umsetzung im Inertgasstrom verglasen werden.

**7.** Verfahren nach einem der Ansprüche 1 bis 6,
bei dem die Kondensationsprodukte nach unterschiedlichen Reaktionszeiten von 2 bis 24 h vorzugsweise 6 bis 8 h isoliert werden.

**8.** Verfahren nach einem der Ansprüche 1 bis 7,
bei dem das durch die Umsetzung erhaltene Reaktionsprodukt im Anschluß an die Umsetzung einer termischen Behandlung im Vakuum unterzogen wird, um die Lagerstabilitat zu erhöhen.

**9.** Verwendung des Umsetzungsproduktes aus 1 und 2 als Harzkomponente zur Abmischung mit gängigen Epoxidharzen.

## Claims

**1.** Process for the preparation of epoxysilanes with epoxide groups bonded via SiC by reaction of an epoxyalkoxysilane of the general structure 1 with a silanol of the general structure 2

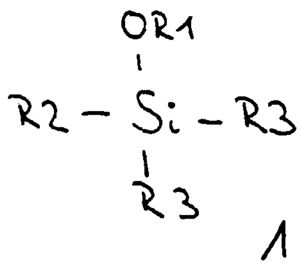

1

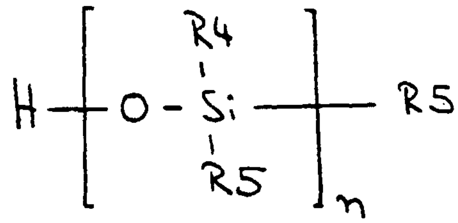

2

in which

R1 is an alkyl radical having 1 to 6 C atoms or an aryl radical,
R2 is a glycidyloxyalkyl, epoxyalkyl or epoxycycloalkyl radical, the two radicals
R3 independently of one another are OR1 or R2 or another alkyl or aryl radical,
R4 is alkyl or aryl, the radicals
R5 independently of one another are OH or R4 and
n is an integer, where $1 \leq n \leq 12$.

2. Process according to Claim 1, in which the reaction is carried out in the presence of a neutral condensation catalyst, preferably at between pH 5 and 8.

3. Process according to Claim 1 or 2, in which the reaction is carried out as a bulk reaction.

4. Process according to one of Claims 1 to 3, in which the reaction is carried out at a temperature of 80 to 150°C.

5. Process according to one of Claims 1 to 4, in which the reaction of the epoxyalkoxysilane 1 with the silanol 2 is carried out approximately stoichiometrically, so that approximately the same number of groups which are capable of condensation is available in the two reaction partners.

6. Process according to one of Claims 1 to 5, in which the volatile contents are blown off in a stream of inert gas during the reaction.

7. Process according to one of Claims 1 to 6, in which the condensation products are isolated after various reaction times of from 2 to 24 hours, preferably 6 to 8 hours.

8. Process according to one of Claims 1 to 7, in which, after the reaction, the reaction product obtained by means of the reaction is subjected to a heat treatment in vacuo in order to increase the storage stability.

9. Use of the reaction product of 1 and 2 as a resin component for blending with customary epoxy resins.

## Revendications

1. Procédé de production d'époxysiloxanes avec des groupes époxydes liés par des liaisons SiC, par conversion d'un époxyalcoxysilane présentant la structure générale 1 avec un silanol présentant la structure générale 2,

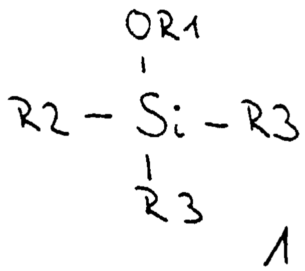

1

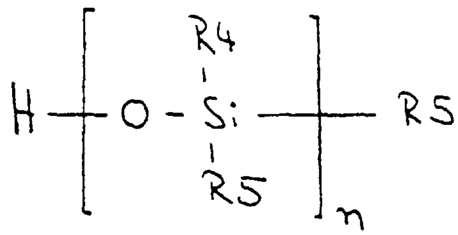

2

où

R1 représente un résidu alkyle avec 1 à 6 atomes de carbone ou un résidu aryle,
R2 est un résidu glycidyloxyalkyle, un résidu époxyalkyle ou un résidu époxycycloalkyle, les deux résidus
R3 représentent indépendamment l'un de l'autre un résidu OR1 ou R2 ou un résidu alkyle, respectivement aryle, supplémentaire,
R4 représente un résidu alkyle ou aryle, les résidus
R5 représentent indépendamment l'un de l'autre un résidu OH ou R4 et
n représente un nombre entier avec $1 < n < 12$.

**2.** Procédé selon la revendication 1, dans lequel la conversion est effectuée en présence d'un catalyseur de condensation neutre, de préférence entre pH 5 à 8.

**3.** Procédé selon la revendication 1 ou 2, dans lequel la conversion est effectuée sous forme d'une réaction en masse.

**4.** Procédé selon l'une quelconque des revendications 1 à 3, dans lequel la conversion est effectuée à une température de 80 à 150 °C.

**5.** Procédé selon l'une quelconque des revendications 1 à 4, dans lequel la conversion de l'époxyalcoxysilane 1 avec le silanol 2 est effectuée d'une manière approximativement stoechiométrique, de manière qu'environ le même nombre de groupes condensables est disponible dans les deux partenaires de réaction.

**6.** Procédé selon l'une quelconque des revendications 1 à 5, dans lequel les fractions volatiles sont vitrifiées pendant la conversion dans un courant de gaz inerte.

**7.** Procédé selon l'une quelconque des revendications 1 à 6, dans lequel les produits de condensation sont isolés après des temps de réaction différents de 2 à 24 h, de préférence de 6 à 8 h.

**8.** Procédé selon l'une quelconque des revendications 1 à 7, dans lequel le produit de réaction obtenu par conversion est soumis après la conversion à un traitement thermique sous vide, pour augmenter la stabilité au stockage.

**9.** Utilisation du produit de conversion de 1 et de 2 comme composant de résine pour le mélange avec des résines époxydes courantes.